# EUROPEAN PATENT SPECIFICATION

(11) **EP 2 883 991 B1**
(45) Date of publication and mention of the grant of the patent: **08.02.2017**
(21) Application number: 14197398.2
(22) Date of filing: 11.12.2014
(51) Int. Cl.: D06F 39/00, G09F 13/08

(54) **Electric home appliance**
Elektrisches Haushaltsgerät
Appareil domestique électrique

(30) Priority: 13.12.2013 KR 20130155715
(43) Date of publication of application: 17.06.2015
(73) Proprietor: LG Electronics Inc., Yeongdeungpo-gu Seoul 07336 (KR)
(72) Inventor: Jung, Hyesun, 642-711 Gyeongsangnam-do (KR); Do, Hongseung, 642-711 Gyeongsangnam-do (KR)
(74) Representative: Ter Meer Steinmeister & Partner

(56) References cited:
- DE-A1- 2 722 291
- DE-U1- 29 710 308
- US-A1- 2006 089 732
- US-A1- 2007 285 917

## Description

### CROSS-REFERENCE TO RELATED APPLICATION

This application claims the priority benefit of Korean Patent Application No. 10-2013-0155715, filed on December 13, 2013, in the Korean Intellectual Property.

### BACKGROUND OF THE INVENTION

### 1. Field of the invention

The present invention relates to an electric home appliance that visually displays an operation state of the electric home appliance through a panel.

### 2. Description of the Related Art

In general, an electric home appliance, such as a washing machine, a drying machine, a cooking appliance, a dish washing machine, or a water purifier, has a panel having a display unit for displaying an operation state of the electric home appliance. An exterior panel of a domestic appliance is disclosed in US 2007/285917 A1, for example. The display unit may include a visual display unit, such as a light emitting diode (LED) or a liquid crystal display (LCD), and an auditory display unit, such as a speaker or a buzzer.

The panel is generally provided with an installation hole, in which the display unit is installed. The display unit is supported in a state in which the display unit is installed in the installation hole. As a result, a gap may be provided between the display unit and the panel and moisture may be introduced into the electric home appliance through the gap or foreign matter may be caught in the gap.

In addition, the appearance of the display unit may always be recognized independently of the panel irrespective of the operation of the display unit based on functions thereof. In recent years, importance in design of the electric home appliance in terms of an aesthetically pleasing appearance as well as performance of the electric home appliance has been highlighted. In the conventional structure as described above, however, it is difficult to provide a region at which the display unit is located with an aesthetically pleasing appearance unless the design of the display unit is improved.

In addition, shielding force of the panel to components disposed at the rear of the panel may be changed based on a color to be realized. In order to obtain a panel having a desired optical property, therefore, it is necessary to change the design of the panel, which decides the shape of the panel, or the structural form of the panel. For example, an optical property, such as light transmissivity or a shielding property, is affected by the thickness of the panel as well as the color of the panel. In order to obtain a panel having a desired optical property, therefore, it is necessary to change the thickness of the panel based on a color. As a result, change in design of the panel or change of a manufacturing method of the panel is inevitable.

### SUMMARY OF THE INVENTION

It is an object of the present invention to provide an electric home appliance that is capable of transmitting light emitted from a light source located at the rear of a panel through a light transmission region of the panel and positively shielding the light emitted from the light source at a light non-transmission region of the panel.

It is another object of the present invention to provide an electric home appliance that is capable of realizing a light transmission region and a light non-transmission region using a thickness difference of a panel.

It is another object of the present invention to provide an electric home appliance wherein it is not necessary to change the shape of a panel although an optical property of the panel based on a color is changed.

It is another object of the present invention to provide an electric home appliance that is capable of fundamentally preventing introduction of moisture or foreign matter through a panel.

It is a further object of the present invention to provide an electric home appliance that is capable of transmitting light emitted from a light source only through one light transmission region assigned to the light source and preventing the light emitted from the light source from being transmitted through another light transmission region which is not assigned to the light source.

In accordance with the present invention, the above and other objects can be accomplished by the provision of an electric home appliance including a light source and a panel having a light non-transmission region having a sufficient thickness not to transmit light emitted from the light source and at least one light transmission region having a thickness reduced by a depression formed at a rear of the panel upon which the light emitted from the light source is incident, the at least one light transmission region transmitting the light emitted from the light source, wherein at least a portion of the light source is disposed in the depression.

The light emitted from the light source may be directly incident upon the rear of the panel through a space defined in the depression.

The at least one light transmission region may include a first light transmission region and a second light transmission region, and the light source may be disposed adjacent to a part of the rear of the panel defining the depression such that light emitted into first light transmission region is not transmitted through the second light transmission region.

The panel may be made of a mixture of a light transmissive resin and a paint. The panel may be formed by injection-molding the mixture of the light transmissive resin and the paint.

The paint may be black. The panel has a thickness of 1 to 1.2 mm at the light transmission region.

The panel includes a panel member formed of a light transmissive material, wherein the panel member having the depression, and a coating layer being coated on a front of the panel member, and the coating layer has a predetermined thickness within a range in which the light emitted from the light source cannot be transmitted through the light non-transmission region and the light emitted from the light source can be transmitted through the light transmission region. The paint includes TiO₂, and the coating layer has a thickness of 7 to 8 µm.

According to the invention, the paint may be a mirror coat material, wherein the coating layer has a thickness of 2 to 3 µm.

The light transmissive material may be acrylonitrile butadiene styrene (ABS), polycarbonate (PC), or poly methyl methacrylate (PMMA).

The panel has a thickness of 1 to 1.2 mm at the depression.

The thickness of the panel at the light transmission region may be defined by a distance between a bottom of the depression and a front of the panel. The thickness of the panel at the light non-transmission region may be defined by a distance between the front of the panel and a rear of the panel at a region other than the depression.

The depression may include a side extending from the bottom for surrounding the light source, and a thickness difference of the panel between the light transmission region and the light non-transmission region is formed by the side.

The panel may be provided at a part thereof corresponding to the light transmission region with a sign including at least one selected from among a symbol, a letter, and a figure. The sign may be formed at a front of the panel. The sign may be formed by printing, stamping, or adhesion.

The light source may be configured to form a pattern including at least one selected from among a symbol, a letter, and a figure on a rear of the panel.

The electric home appliance may further include a drive unit for driving the light source and a circuit board on which the drive unit is mounted, wherein the light source, the drive unit, and the circuit board may be sequentially stacked.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a partial view showing a panel of an electric home appliance according to an embodiment of the present invention;
FIG. 2 is a sectional view showing a black panel as an example of the panel shown in FIG. 1 and a light source;
FIG. 3(a) is a sectional view showing a white or metal-colored panel as another example of the panel shown in FIG. 1;
FIG. 3(b) is a sectional view showing a structure in which a light source is mounted in the panel shown in FIG. 3(a); and
FIG. 4 is a view showing a panel having a plurality of light transmission regions and a light source.

### DETAILED DESCRIPTION OF THE PREFERRED EMBODIMENTS

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like parts.

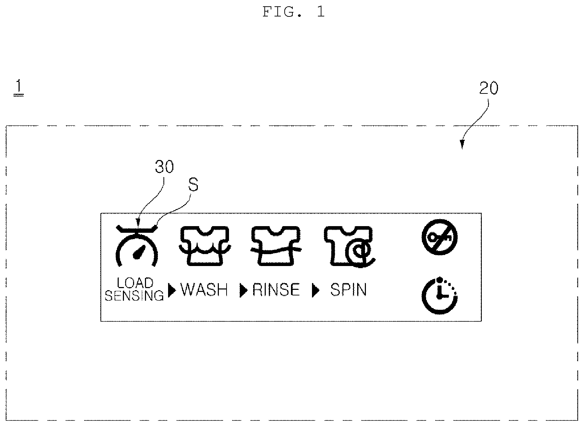

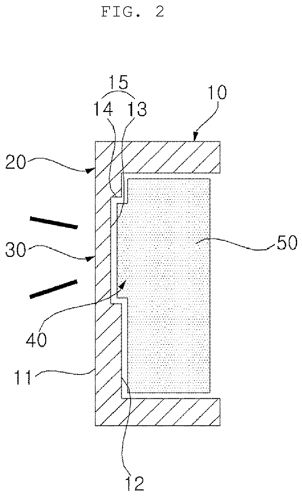

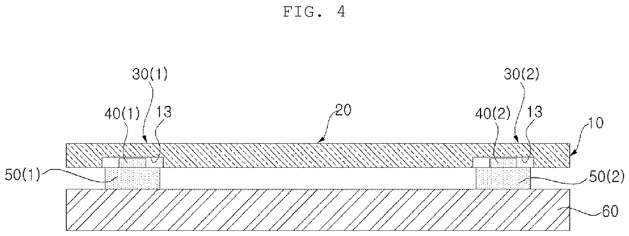

FIG. 1 is a partial view showing a panel of an electric home appliance according to an embodiment of the present invention. FIG. 2 is a sectional view showing a black panel as an example of the panel shown in FIG. 1 and a light source. FIG. 4 is a view showing a panel having a plurality of light transmission regions and a light source.

Referring to FIGURES 1 and 2, an electric home appliance includes a panel 10 and a light source 40 (see FIG. 2). The panel 10 may be provided with a manipulation unit for allowing a user to manipulate the electric home appliance and a display unit for displaying an operation state of the electric home appliance. The light source 40 constitutes the display unit. The light source 40 is disposed at the rear of the panel 10 for emitting light. According to embodiments, the display unit may also function as the manipulation unit. For example, the display unit may include a sensor for sensing capacitance changed when a user touches a displayed region.

Signs S, such as symbols, letters, and figures, may be displayed on the panel 10 by printing, stamping, adhesion, etc. For example, FIG. 1 is a panel of a washing machine. Signs S including figures and letters for displaying operating processes, such as load sensing (LOAD SENSING), washing (WASH), rinsing (RINSE), and spin drying (SPIN), of the washing machine are shown in FIG. 1.

The light source 40 is covered by the panel 10. As a result, it is not possible to recognize the light source 40 from the outside of the panel 10 in a state in which the light source 40 is off. In a state in which the light source 40 is on, on the other hand, light emitted from the light source 40 is transmitted through a predetermined region of the panel 10. That is, light emitted from the light source 40 toward the rear 12 of the panel 10 is transmitted through the panel 10 with the result that the signs S on the front 11 of the panel 10 become light. A plurality of light sources 40 may be provided such that the light sources 40 can be assigned to the respective signs S.

Since the display unit, such as the light source 40, is not recognized from the outside of the panel 10 in a state in which the light source 40 is off and a display function is realized by light emitted from the light source 40 only in a state in which the light source 40 is on, the above structure will hereinafter be defined as a hidden display device.

In the hidden display device, it is not necessary to form an opening at the panel 10 such that the display unit is mounted in the opening. As a result, the surface of the panel 10 may be smooth. Consequently, it is possible to provide an aesthetically pleasing appearance and to fundamentally prevent introduction of moisture or foreign matter to the rear of the panel 10.

The panel 10 has a light non-transmission region 20 and at least one light transmission region 30. The light non-transmission region 20 has a sufficient thickness not to transmit light emitted from the light source 40. The panel 10 is provided at the rear 12 thereof with a depression 15. The light transmission region 30 is a region having a thickness less than that of the light non-transmission region 20 by the depression 15. The light transmission region 30 transmits light emitted from the light source 40.

The depression 15 includes a bottom 13 and a side 14. The bottom 13 and the side 14 constitute the rear 12 of the panel 10. The bottom 13 is a portion more adjacent to the front of the panel 10 than the light non-transmission region 20. The thickness of the panel 10 at the light transmission region 30 may be defined by the distance between the front of the panel 10 and the bottom 13.

The side 14 forms the thickness difference of the panel 10 between the light non-transmission region 20 and the light transmission region 30. The side 14 surrounds the light source 40.

At least a portion of the light source 40 is disposed in the depression 15. In the depression 15, the light source 40 may be disposed adjacent to the rear 12 of the panel 10 to the highest degree. Light emitted from the light source 40 is transmitted through the light transmission region 30 in the depression 15. However, it is necessary for the light emitted from the light source 40 to be transmitted through the side 14 of the depression 15 so as to reach the light non-transmission region 20. Consequently, a light shielding property of the light non-transmission region 20 is improved.

Light emitted from the light source 40 may be directly incident upon the rear 12 (i.e. the bottom 13 of the depression 15) of the panel 10 through a space defined in the depression 15. The light source 40 may be disposed adjacent to the rear 12 of the panel 10 to the highest degree such that a sufficient amount of light is incident upon the rear 12 of the panel 10. In this case, a pattern (hereinafter, referred to as 'pattern light') in which light emitted from the light source 40 is formed on the panel 10 may also be recognized in the front of the panel 10 without being changed. Even in a case in which the signs S are not formed on the panel 10, therefore, the pattern light may function as the signs.

Referring to FIG. 4, the at least one light transmission region 30 may include a first light transmission region 30(1) and a second light transmission region 30(2). On the assumption that a first light source 40(1), which is one of the light sources 40, is assigned to the first light transmission region 30(1) and a second light source 40(2), which is another of the light sources 40, is assigned to the second light transmission region 30(2), the first light source 40(1) may be disposed in the depression 15 in a state in which the first light source 40(1) is adjacent to the rear 12 of the panel 10 such that light emitted from the first light source 40(1) is transmitted through the first light transmission region 30(1) but is not transmitted through the second light transmission region 30(2). The same may be applied to the second light source 40(2). That is, even in a case in which a plurality of light transmission regions 30 each having a thickness less than that of the light non-transmission region 20, dispersion of light is prevented by the depression 15 to a certain extent. As a result, light emitted from one light source 40(1) is transmitted only through the light transmission region 30(1) assigned to the light source 40(1) but is not transmitted through the light transmission region 30(2) assigned to another light source 40(2).

The light source 40 is mounted on a circuit board 60. For example, a circuit electrically connected to the light source 40, a drive unit 50 for controlling lighting of the light source 40, and a memory for storing a program for deciding a lighting pattern of the light source 40 may be mounted on the circuit board 60. A plurality of light sources 40 may be disposed on the circuit board 60. The light sources 40 may be turned on according to the lighting pattern stored in the memory under control of drive units 50 corresponding to the respective light sources 40. A plurality of drive units 50(1) and 50(2) may be provided. The drive units 50(1) and 50(2) may be mounted on the circuit board 60. In particular, as shown in FIG. 4, the light sources 40, the drive units 50, and the circuit board 60 may be sequentially stacked.

Referring to FIG. 2, the panel 10 may be formed by injection-molding a mixture of a light transmissive material, such as a resin material, and a paint. The panel 10 may have different colors based on colors of the added paint. The closer the color of the paint is to black, the more a shielding property of the panel 10 is improved. In a case in which the hidden display device is realized, therefore, it is possible to further reduce the thickness of the panel 10. Acrylonitrile butadiene styrene (ABS), polycarbonate (PC), or poly methyl methacrylate (PMMA) may be used as the light transmissive material.

In the light transmission region 30, the smaller the thickness of the panel 10 is, the more the light transmissivity of the panel is improved. However, it is necessary for the panel 10 to have a certain thickness in consideration of overall rigidity of the panel 10 and a shielding property of the panel 10 at the rear thereof in a state in which the light source 40 is off. For example, in a case in which the panel 10 is a black panel, the panel 10 may have a thickness of 1 to 1.2 mm at the light transmission region 30.

In a case in which the panel 10 is formed to have a black color, a shielding property of the panel 10 at the rear thereof is high due to optical properties of the color. Consequently, it is possible to realize the hidden display device only by adding a paint during injection molding of the panel 10 without an additional process. For a white or metal-colored (particularly, silver) panel, on the other hand, it is necessary to add a large amount of a paint such that the panel has a high light shielding property while providing a uniform color. In this case, the thickness of the light transmission region 30 of the white or metal-colored panel must be less than that of the light transmission region 30 of the black panel such that light emitted from the light source is transmitted through the light transmission region 30. As a result, it is difficult to secure rigidity of the panel 10. Furthermore, even in a case in which the white or metal-colored panel may be desired to be configured such that the white or metal-colored panel is identical in construction to the black panel 10 except for the color, it may not be possible to configure the white or metal-colored panel such that the white or metal-colored panel is identical in construction to the black panel 10 except for the color. In addition, it is not possible to utilize manufacturing equipment, such as a mold, used to manufacture the black panel 10. As a result, change in design of the panel and change of manufacturing equipment or a manufacturing process of the panel are inevitable. Consequently, manufacturers who manufacture and sell electric home appliances having the same specifications and different colors so as to satisfy taste of consumers have disadvantages in terms of common use of parts and mass production. Hereinafter, a description will be given of a white or metal-colored panel that is capable of realizing a hidden display device without change in structure of the panel (for example, the white or metal-colored panel may have the same thickness as the black panel) as compared with the black panel 10 previously described with reference to FIG. 2.

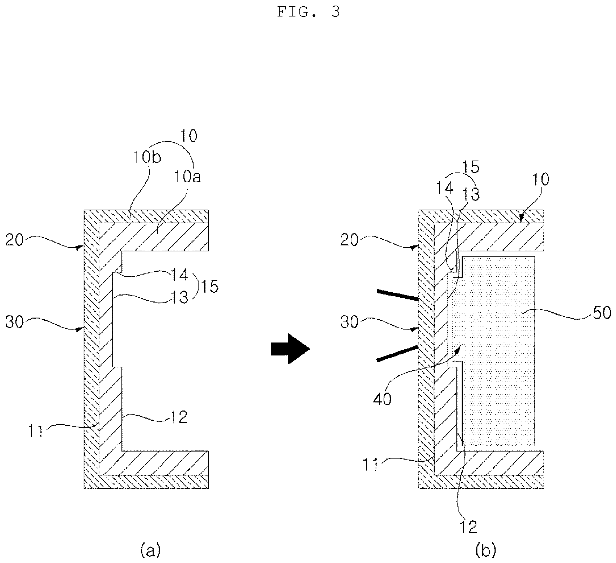

FIG. 3(a) is a sectional view showing a white or metal-colored panel as another example of the panel shown in FIG. 1 and FIG. 3(b) is a sectional view showing a structure in which a light source is mounted in the panel shown in FIG. 3(a). Referring to FIGS. 3(a) and 3(b), a panel 10 is formed by injection-molding a light transmissive material. The panel 10 includes a panel member 10a having a depression 15 and a coating layer 10b formed by applying a paint to the front of the panel member 10a. The coating layer 10b may have a predetermined thickness within a range in which light emitted from the light source 40 cannot be transmitted through the light non-transmission region 20 and light emitted from the light source 40 can be transmitted through the light transmission region 30.

A paint for realizing a white color may include a titanium oxide, such as TiO or TiO₂. For a paint, a content ratio of a titanium oxide of which is 5.6 to 6.4 %, the thickness of the coating layer necessary to realize the hidden display device may be 7 to 8 µm. In this case, it is possible to provide a vivid white color and to maintain the color of the light source 40 at the light transmission region 30.

Meanwhile, the panel member 10a may be made of a light transmissive material. In the same manner as the panel 10 of the previous embodiment, the panel member 10a may be formed by injection-molding ABS or PC. However, the panel member 10a is different from the panel 10 of the previous embodiment in that the panel member 10a is made of a pure resin having no paint added thereto and thus is transparent.

In order to realize the metal-colored panel 10, the coating layer 10b may be formed by applying a mirror coat material to the panel member 10a. The mirror coat material includes a high-luminance metallic light reflective component. In a case in which the mirror coat material is applied to the surface of an object, luminance of the surface of the object is improved due to a light reflection effect of the light reflective component. In particular, metallic material and color properties are obtained. Specifically, a silver color, such as aluminum or stainless steel, may be realized according to the light reflective component. The mirror coat material exhibits a high light shielding property. For this reason, it is necessary for the thickness of the coating layer 10b not to be too large so as to realize the hidden display device. Specifically, the thickness of the coating layer 10b of the metal-colored panel 10 may be less than that of the coating layer 10b of the white panel 10. For example, the coating layer 10b of the metal-colored panel 10 may have a thickness of 2 to 3 µm.

As is apparent from the above description, the electric home appliance according to the present invention has the effect of transmitting light emitted from the light source located at the rear of the panel through the light transmission region of the panel and positively shielding the light emitted from the light source at the light non-transmission region of the panel.

In addition, the electric home appliance according to the present invention has the effect of realizing the light transmission region and the light non-transmission region based on the simple structure using the thickness difference of the panel.

In addition, it is not necessary to change the shape of the panel although an optical property of the panel based on a color is changed. Consequently, the electric home appliance according to the present invention has the effect of providing high common usability of parts and improved productivity.

In addition, the electric home appliance according to the present invention has the effect of fundamentally preventing introduction of moisture or foreign matter through the panel.

In addition, the electric home appliance according to the present invention has the effect of transmitting light emitted from the light source only through one light transmission region assigned to the light source and preventing the light emitted from the light source from being transmitted through another light transmission region which is not assigned to the light source.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. An electric home appliance comprising:
- a light source (40); and
- a panel (10) having a light non-transmission region (20) having a sufficient thickness not to transmit light emitted from the light source (40) and at least one light transmission region (30) having a thickness reduced by a depression (15) formed at a rear (12) of the panel (10) upon which the light emitted from the light source (40) is incident, the at least one light transmission region (30) transmitting the light emitted from the light source (40), wherein at least a portion of the light source (40) is disposed in the depression (15),
wherein the panel (10) comprising:
a panel member (10a) formed of light transmissive material, wherein the panel member (10a) having the depression (15); and
a coating layer (10b) being coated on a front of the panel member (10a) with a paint which includes titanium oxide;
wherein the coating layer (10b) has a predetermined thickness within a range that allows transmission of the light emitted from the light source (40) through the light transmission region (30), and
wherein the light transmittive material is acrylonitrile butadiene styrene (ABS), polycarbonate (PC), or poly methyl methacrylate (PMMA), wherein the panel has a thickness of 1 to 1.2 mm at the depression and the coating layer (10b) has a thickness of 7 to 8 *µ*m.

2. The electric home appliance according to claim 1, wherein the light emitted from the light source (40) is directly incident upon the rear (12) of the panel (10) through a space defined in the depression (15).

3. The electric home appliance according to claim 1 or 2, wherein
- the at least one light transmission region (30) comprises a first light transmission region (30(1)) and a second light transmission region (30(2)), and
- the light source (40) is disposed adjacent to a part of the rear (12) of the panel (10) defining the depression (15) such that light emitted into first light transmission region (30(1)) is not transmitted through the second light transmission region (30(2)).

4. The electric home appliance according to any one of the claims 1 to 3, wherein the panel (10) is made of a mixture of a light transmissive resin and a paint.

5. The electric home appliance according to claim 4, wherein the panel (10) composed of a mixture of the light transmissive resin and the paint.

6. The electric home appliance according to claim 4 or 5, wherein the paint is black.

7. The electric home appliance according to any one of preceding claims, wherein the thickness of the panel (10) at the light transmission region (30) is defined by a distance between a bottom (13) of the depression (15) and a front (11) of the panel (10).

8. The electric home appliance according to claim 7, wherein the thickness of the panel (10) at the light non-transmission region (20) is defined by a distance between the front (11) of the panel (10) and a rear (12) of the panel (10) at a region other than the depression (15).

9. The electric home appliance according to any one of preceding claims, wherein
- the depression (15) comprises a side (14) extending from the bottom (13) for surrounding the light source (40), and
- a thickness difference of the panel (10) between the light transmission region (30) and the light non-transmission region (20) is formed by the side (14).

10. The electric home appliance according to any one of preceding claims wherein the panel (10) is provided at a part thereof corresponding to the light transmission region (30) with a sign (S) comprising at least one selected from among a symbol, a letter, and a figure.

11. The electric home appliance according to claim 10, wherein the sign (S) being formed at a front (11) of the panel (10).

12. The electric home appliance according to claim 11, wherein the sign (S) being formed by printing, stamping, or adhesion.

13. The electric home appliance according to any one of preceding claims, wherein the light source (40) is configured to form a pattern comprising at least one selected from among a symbol, a letter, and a figure on a rear (129 of the panel (10).

14. The electric home appliance according to any one of preceding claims, further comprising:
- a drive unit (50) for driving the light source (40); and
- a circuit board (60) on which the drive unit (50) is mounted,
wherein the light source (40), the drive unit (50), and the circuit board (60) are sequentially stacked.

15. An electric home appliance comprising:
- a light source (40); and
- a panel (10) having a light non-transmission region (20) having a sufficient thickness not to transmit light emitted from the light source (40) and at least one light transmission region (30) having a thickness reduced by a depression (15) formed at a rear (12) of the panel (10) upon which the light emitted from the light source (40) is incident, the at least one light transmission region (30) transmitting the light emitted from the light source (40), wherein at least a portion of the light source (40) is disposed in the depression (15), the panel (10) comprising:
a panel member (10a) formed of light transmissive material, the panel member (10a) having the depression (15); and
a coating layer (10b) coated on a front of the panel member (10a) with a paint including a mirror coat material, the coating layer (10b) has a predetermined thickness within a range that allows the light emitted from the light source (40) is transmitted through the light transmission region (30), wherein
the light transmissive material is acrylonitrile butadiene styrene (ABS), polycarbonate (PC), or poly methyl methacrylate (PMMA), the panel has a thickness of 1 to 1.2 mm at the depression and the coating layer (10b) has a thickness of 2 to 3 *µ*m.

## Patentansprüche

1. Elektrisches Haushaltsgerät, das Folgendes umfasst:
- eine Lichtquelle (40); und
- eine Konsole (10), die einen Bereich (20), der kein Licht überträgt, der eine ausreichende Dicke aufweist, um das von der Lichtquelle (40) emittierte Licht nicht zu übertragen, und mindestens einen Lichtübertragungsbereich (30), der eine Dicke aufweist, die durch eine Vertiefung (15) verringert ist, die in einer Rückseite (12) der Konsole (10) ausgebildet ist, auf den das von der Lichtquelle (40) emittierte Licht einfällt, aufweist, wobei der mindestens eine Lichtübertragungsbereich (30) das von der Lichtquelle (40) emittierte Licht überträgt, wobei zumindest ein Abschnitt der Lichtquelle (40) in der Vertiefung (15) angeordnet ist,
wobei die Konsole (10) Folgendes umfasst:
ein Konsolenelement (10a), das aus einem lichtdurchlässigen Material gebildet ist, wobei das Konsolenelement (10a) die Vertiefung (15) aufweist; und
eine Beschichtungsschicht (10b), die auf einer Stirnseite des Konsolenelements (10a) mit einer Farbe beschichtet ist, die Titanoxid enthält;
wobei die Beschichtungsschicht (10b) eine vorgegebene Dicke in einem Bereich aufweist, der die Übertragung des von der Lichtquelle (40) emittierten Lichts durch den Lichtübertragungsbereich (30) ermöglicht, und
wobei das lichtdurchlässige Material Acrylnitril-Butadien-Styrol (ABS), Polycarbonat (PC) oder Polymethylmethacrylat (PMMA) ist, wobei die Konsole an der Vertiefung eine Dicke von 1 bis 1,2 mm aufweist und die Beschichtungsschicht (10b) eine Dicke von 7 bis 8 µm aufweist.

2. Elektrisches Haushaltsgerät nach Anspruch 1, wobei das von der Lichtquelle (40) emittierte Licht durch einen Raum, der in der Vertiefung (15) definiert ist, direkt auf die Rückseite (12) der Konsole (10) einfällt.

3. Elektrisches Haushaltsgerät nach Anspruch 1 oder 2, wobei
- der mindestens eine Lichtübertragungsbereich (30) einen ersten Lichtübertragungsbereich (30(1)) und einen zweiten Lichtübertragungsbereich (30(2)) umfasst, und
- die Lichtquelle (40) angrenzend an eine Komponente der Rückseite (12) der Konsole (10), die die Vertiefung (15) definiert, derart angeordnet ist, dass das Licht, das in den ersten Lichtübertragungsbereich (30(1)) emittiert wird, nicht durch den zweiten Lichtübertragungsbereich (30(2)) übertragen wird.

4. Elektrisches Haushaltsgerät nach einem der Ansprüche 1 bis 3, wobei die Konsole (10) aus einer Mischung aus einem lichtdurchlässigen Harz und einer Farbe hergestellt ist.

5. Elektrisches Haushaltsgerät nach Anspruch 4, wobei die Konsole (10) aus einer Mischung aus dem lichtdurchlässigen Harz und der Farbe besteht.

6. Elektrisches Haushaltsgerät nach Anspruch 4 oder 5, wobei die Farbe schwarz ist.

7. Elektrisches Haushaltsgerät nach einem der vorhergehenden Ansprüche, wobei die Dicke der Konsole (10) im Lichtübertragungsbereich (30) durch einen Abstand zwischen einem Boden (13) der Vertiefung (15) und einer Stirnseite (11) der Konsole (10) definiert ist.

8. Elektrisches Haushaltsgerät nach Anspruch 7, wobei die Dicke der Konsole (10) in dem Bereich (20), der kein Licht überträgt, durch einen Abstand zwischen der Stirnseite (11) der Konsole (10) und einer Rückseite (12) der Konsole (10) in einem anderen Bereich als der Vertiefung (15) definiert ist.

9. Elektrisches Haushaltsgerät nach einem der vorhergehenden Ansprüche, wobei
- die Vertiefung (15) eine Seite (14) umfasst, die sich vom Boden (13) erstreckt, um die Lichtquelle (40) zu umgeben, und
- eine Dickendifferenz der Konsole (10) zwischen dem Lichtübertragungsbereich (30) und dem Bereich (20), der kein Licht überträgt, durch die Seite (14) gebildet ist.

10. Elektrisches Haushaltsgerät nach einem der vorhergehenden Ansprüche, wobei die Konsole (10) auf einer ihrer Komponenten, die dem Lichtübertragungsbereich (30) entspricht, mit einem Zeichen (S) versehen ist, das ein Symbol und/oder einen Buchstaben und/oder eine Figur umfasst.

11. Elektrisches Haushaltsgerät nach Anspruch 10, wobei das Zeichen (S) auf einer Stirnseite (11) der Konsole (10) gebildet ist.

12. Elektrisches Haushaltsgerät nach Anspruch 11, wobei das Zeichen (S) durch Drucken, Stempeln oder Haftung gebildet ist.

13. Elektrisches Haushaltsgerät nach einem der vorhergehenden Ansprüche, wobei die Lichtquelle (40) konfiguriert ist, auf einer Rückseite (12) der Konsole (10) ein Muster zu bilden, das ein Symbol, und/oder einen Buchstaben und/oder eine Figur umfasst.

14. Elektrisches Haushaltsgerät nach einem der vorhergehenden Ansprüche, die ferner Folgendes umfasst:
- eine Ansteuereinheit (50) zum Ansteuern der Lichtquelle (40); und
- eine Leiterplatte (60), auf der die Ansteuereinheit (50) befestigt ist,
wobei die Lichtquelle (40), die Ansteuereinheit (50) und die Leiterplatte (60) aufeinanderfolgend gestapelt sind.

15. Elektrisches Haushaltsgerät, das Folgendes umfasst:
- eine Lichtquelle (40); und
- eine Konsole (10), die einen Bereich (20), der kein Licht überträgt, der eine ausreichende Dicke aufweist, um das von der Lichtquelle (40) emittierte Licht nicht zu übertragen, und mindestens einen Lichtübertragungsbereich (30), der eine Dicke aufweist, die durch eine Vertiefung (15) verringert ist, die in einer Rückseite (12) der Konsole (10) ausgebildet ist, auf den das von der Lichtquelle (40) emittierte Licht einfällt, aufweist, wobei der mindestens eine Lichtübertragungsbereich (30) das von der Lichtquelle (40) emittierte Licht überträgt, wobei zumindest ein Abschnitt der Lichtquelle (40) in der Vertiefung (15) angeordnet ist, wobei die Konsole (10) Folgendes umfasst:
ein Konsolenelement (10a), das aus einem lichtdurchlässigen Material gebildet ist, wobei das Konsolenelement (10a) die Vertiefung (15) aufweist; und
eine Beschichtungsschicht (10b), die auf einer Stirnseite des Konsolenelements (10a) mit einer Farbe beschichtet ist, die ein Spiegelbeschichtungsmaterial enthält, wobei die Beschichtungsschicht (10b) eine vorgegebene Dicke in einem Bereich aufweist, der ermöglicht, dass das von der Lichtquelle (40) emittierte Licht durch den Lichtübertragungsbereich (30) übertragen wird, wobei
das lichtdurchlässige Material Acrylnitril-Butadien-Styrol (ABS), Polycarbonat (PC) oder Polymethylmethacrylat (PMMA) ist, wobei die Konsole an der Vertiefung eine Dicke von 1 bis 1,2 mm aufweist und die Beschichtungsschicht (10b) eine Dicke von 2 bis 3 µm aufweist.

## Revendications

1. Appareil domestique électrique comprenant :
- une source lumineuse (40) ; et
- un panneau (10) comportant une région de non-transmission de lumière (20) ayant une épaisseur suffisante pour ne pas transmettre de lumière émise de la source lumineuse (40) et au moins une région de transmission de lumière (30) ayant une épaisseur réduite par une dépression (15) formée à un arrière (12) du panneau (10) sur laquelle la lumière émise de la source lumineuse (40) est incidente, l'au moins une région de transmission de lumière (30) transmettant la lumière émise de la source lumineuse (40), dans lequel au moins une portion de la source lumineuse (40) est disposée dans la dépression (15),
dans lequel le panneau (10) comprend :
un organe de panneau (10a) constitué d'un matériau transmettant la lumière, dans lequel l'organe de panneau (10a) comprend la dépression (15) ; et
une couche de revêtement (10b) revêtue sur un avant de l'organe de panneau (10a) avec une peinture comportant de l'oxyde de titane ;
dans lequel la couche de revêtement (10b) a une épaisseur prédéterminée à l'intérieur d'une plage permettant une transmission de la lumière émise de la source lumineuse (40) à travers la région de transmission de lumière (30), et
dans lequel le matériau transmettant la lumière est du styrène butadiène acrylonitrile (ABS), du polycarbonate (PC) ou du polyméthylemétacrylate (PMMA), dans lequel le panneau a une épaisseur de 1 à 1,2 mm à la dépression et la couche de revêtement (10b) a une épaisseur de 7 à 8 µm.

2. Appareil domestique électrique selon la revendication 1, dans lequel la lumière émise de la source lumineuse (40) est directement incidente sur l'arrière (12) du panneau (10) à travers un espace défini dans la dépression (15).

3. Appareil domestique électrique selon la revendication 1 ou 2, dans lequel
- l'au moins une région de transmission de lumière (30) comprend une première région de transmission de lumière (30(1)) et une deuxième région de transmission de lumière (30(2)), et
- la source lumineuse (40) est disposée adjacente à une partie de l'arrière (12) du panneau (10) définissant la dépression (15) de sorte que la lumière émise dans la première région de transmission de lumière (30(1)) ne soit pas transmise à travers la deuxième région de transmission de lumière (30(2)).

4. Appareil domestique électrique selon l'une quelconque des revendications 1 à 3, dans lequel le panneau (10) est constitué d'un mélange d'une résine transmettant la lumière et d'une peinture.

5. Appareil domestique électrique selon la revendication 4, dans lequel le panneau (10) est composé d'un mélange de la résine transmettant la lumière et de la peinture.

6. Appareil domestique électrique selon la revendication 4 ou 5, dans lequel la peinture est noire.

7. Appareil domestique électrique selon l'une quelconque des revendications précédentes, dans lequel l'épaisseur du panneau (10) à la région de transmission de lumière (30) est définie par une distance entre un fond (13) de la dépression (15) et un avant (11) du panneau (10).

8. Appareil domestique électrique selon la revendication 7, dans lequel l'épaisseur du panneau (10) à la région de non-transmission de lumière (20) est définie par une distance entre l'avant (11) du panneau (10) et un arrière (12) du panneau (10) à une région autre que la dépression (15).

9. Appareil domestique électrique selon l'une quelconque des revendications précédentes, dans lequel
- la dépression (15) comprend un côté (14) s'étendant du fond (13) pour entourer la source lumineuse (40), et
- une différence d'épaisseur du panneau (10) entre la région de transmission de lumière (30) et la région de non-transmission de lumière (20) est formée par le côté (14).

10. Appareil domestique électrique selon l'une quelconque des revendications précédentes, dans lequel le panneau (10) est pourvu, à une partie de celui-ci correspondant à la région de transmission de lumière (30), d'un signe (S) comprenant au moins l'un sélectionné parmi un symbole, une lettre et un nombre.

11. Appareil domestique électrique selon la revendication 10, dans lequel le signe (S) est formé à un avant (11) du panneau (10).

12. Appareil domestique électrique selon la revendication 11, dans lequel le signe (S) est formée par impression, estampage ou adhérence.

13. Appareil domestique électrique selon l'une quelconque des revendications précédentes, dans lequel la source lumineuse (40) est configurée pour former un motif comprenant au moins l'un sélectionné parmi un symbole, une lettre et un nombre sur un arrière (129) du panneau (10).

14. Appareil domestique électrique selon l'une quelconque des revendications précédentes, comprenant en outre :
- une unité de commande (50) pour commander la source lumineuse (40) ; et
- une carte de circuit (60) sur laquelle l'unité de commande (50) est montée,
dans lequel la source lumineuse (40), l'unité de commande (50) et la carte de circuit (60) sont empilées séquentiellement.

15. Appareil domestique électrique comprenant :
- une source lumineuse (40) ; et
- un panneau (10) comportant une région de non-transmission de lumière (20) ayant une épaisseur suffisante pour ne pas transmettre de lumière émise de la source lumineuse (40) et au moins une région de transmission de lumière (30) ayant une épaisseur réduite par une dépression (15) formée à un arrière (12) du panneau (10) sur laquelle la lumière émise de la source lumineuse (40) est incidente, l'au moins une région de transmission de lumière (30) transmettant la lumière émise de la source lumineuse (40), dans lequel au moins une portion de la source lumineuse (40) est disposée dans la dépression (15), le panneau (10) comprenant :
un organe de panneau (10a) constitué d'un matériau transmettant la lumière, l'organe de panneau (10a) comprenant la dépression (15) ; et
une couche de revêtement (10b) revêtue sur un avant de l'organe de panneau (10a) avec une peinture comportant un matériau de revêtement de miroir, la couche de revêtement (10b) ayant une épaisseur prédéterminée à l'intérieur d'une plage permettant une transmission de la lumière émise de la source lumineuse (40) à travers la région de transmission de lumière (30), et
dans lequel le matériau transmettant la lumière est du styrène butadiène acrylonitrile (ABS), du polycarbonate (PC) ou du polyméthylemétacrylate (PMMA), dans lequel le panneau a une épaisseur de 1 à 1,2 mm à la dépression et la couche de revêtement (10b) a une épaisseur de 2 à 3 µm.
